# EUROPÄISCHE PATENTSCHRIFT

(11) **EP 3 782 180 B1**
(45) Veröffentlichungstag und Bekanntmachung des Hinweises auf die Patenterteilung: **06.04.2022**
(21) Anmeldenummer: 19722496.7
(22) Anmeldetag: 17.04.2019
(51) Int. Cl.: H01H 13/84

(54) **EINGABEGERAET**
INPUT DEVICE
APPAREIL D'ENTRÉE

(30) Priorität: 18.04.2018 AT 600582018
(43) Veröffentlichungstag der Anmeldung: 24.02.2021
(73) Patentinhaber: Drory, Matthäus, 3032 Eichgraben (AT)
(72) Erfinder: Drory, Matthäus, 3032 Eichgraben (AT)
(74) Vertreter: Speringer, Markus
(86) Internationale Anmeldenummer: PCT/AT2019/060130
(87) Internationale Veröffentlichungsnummer: WO 2019/200421

(56) Entgegenhaltungen:
- WO-A1-2017/162712
- CN-Y- 201 278 134
- JP-A- S62 152 031

## Beschreibung

### Technisches Gebiet

Die Erfindung betrifft ein Eingabegerät in Form einer Einhandtastatur umfassend ein im Wesentlichen flaches Gehäuse in etwa in der Form eines Viertelkreissektors, in welchem eine erste Tastaturplatine mit zugehörigen ersten Tasten untergebracht ist, wobei die ersten Tasten auf einer ersten Gehäuseseite liegen und fächerartig entlang von konzentrischen Kreisbogenabschnitten angeordnet sind.

### Stand der Technik

Ein immer größer werdender Teil der heutigen Arbeitswelt betrifft das Arbeiten mit Computern. Eines der wichtigsten Eingabegeräte bei der Computerarbeit ist die Tastatur und es gibt zahlreiche Ansätze die Ergonomie von Tastaturen zu erhöhen, um ein ermüdungsfreies Arbeiten ohne Belastung für den Benutzer zu ermöglichen. Einer optimalen Ergonomie sind aus praktischer Sicht oft dadurch Grenzen gesetzt, dass die Tastatur von ihrem Layout her nicht zu sehr von allgemein bekannten und weitgehend standardisierten Layouts abweichen soll, sowie auch hinsichtlich ihrer Herstellungskosten konkurrenzfähig zu günstigen herkömmlichen Tastaturen sein soll.

Insbesondere für Menschen mit Behinderungen, welche beispielsweise nur eine Hand verwenden können, gibt es praktisch keine massentauglichen preisgünstigen Lösungen, welche ein einfaches Arbeiten am PC ermöglichen. Wenn überhaupt, so sind zumeist nur Speziallösungen bekannt, wie beispielsweise in der US 2001021332 A beschrieben, bei welchen einerseits die Herstellungskosten sehr hoch sind, da aufwändige Anordnungen der Tasten und der Platine notwendig sind, und welche andererseits ein hohes Maß an Training des Benutzers erfordern, da das Tastenlayout komplett von den bekannten Standardlayouts abweicht.

Eine einfachere Lösung ist beispielsweise in der KR 20120070162 offenbart, bei welcher die Tasten fächerartig in einem Halbkreis angeordnet sind, wobei im Bereich des Mittelpunkts die Cursortasten platziert sind. Diese Tastatur kann zumindest auf einer bekannten flachen Tastaturplatine realisiert werden und sich weitgehend an Standardlayouts orientieren, jedoch bringt sie den Nachteil, dass die Hand des Benutzers um 180° hin und hergedreht werden muss, was bei längerem Arbeiten das Handgelenk strapaziert. Außerdem kann die Tastatur nur sehr klein gefertigt werden, damit auch die oberen Tastenreihen noch erreicht werden können, ohne dass unabsichtlich mit dem Handballen die Cursortasten betätigt werden. Ein rasches und flüssiges Tippen wird dadurch erschwert.

In der AT 15344 U1, welches die Prioritätsanmeldung der WO 2017/162712 A1 ist, wird eine Einhandtastatur offenbart, welche wie herkömmliche Tastaturen kostengünstig mit einer flachen Tastaturplatine gefertigt werden kann. Die Tasten sind auf konzentrischen Kreisbogenabschnitten fächerförmig in einem Viertelkreissektor angeordnet. Im Scheitelbereich der Tastatur befindet sich eine Handauflage, welche einen einfachen Zugang zu allen Tasten erlaubt. Obwohl diese Tastatur die oben genannten Probleme löst hat sich in der Praxis herausgestellt, dass weiterer Verbesserungsbedarf besteht. So nimmt die oben genannte Tastatur keine Rücksicht darauf, ob der Benutzer ein Rechts- oder Linkshänder ist. Da die Mehrheit der Menschen Rechtshänder sind, werden auch die meisten Massenartikel für diese gefertigt, wobei beispielsweise die Anordnung der Tasten einer Tastatur, insbesondere beispielsweise die Position von Steuertasten, Cursor, Trackball etc., für Linkshänder dann suboptimal ist. Neben dem Einsatzgebiet für Menschen mit Behinderung haben aber Einhandtastaturen auch Vorteile bei vielen Tätigkeiten, wo Computereingaben gemacht werden müssen, während man mit der zweiten Hand eine andere Tätigkeit durchführt. Dies betrifft beispielsweise Eingaben an Produktionsmaschinen, bei Inventartätigkeiten, bei Rechenarbeiten usw. Hier kann es je nach Tätigkeit durchaus öfter vorkommen, dass der Nutzer die dominante Hand für die eigentliche Tätigkeit benutzt und die Computereingabe mit der anderen Hand durchführt.

Die JP S62152031 zeigt eine beidseitige Tastatur, welche jeweils an der Ober- und Unterseite Tasten aufweist. Die beiden Tastaturen haben hinsichtlich des verwendeten Zeichensatzes ein unterschiedliches Layout, damit Leute mit unterschiedlichen Sprachanforderungen den gleichen Computer ohne Umstecken des Eingabegeräts bedienen können. Über die Art der Umschaltung wird in der Druckschrift nichts näher erwähnt.

### Darstellung der Erfindung

Die Aufgabe der vorliegenden Erfindung besteht also darin, die oben genannte ergonomische und günstig herzustellende Einhandtastatur dahingehend zu verbessern, dass diese vom Benutzer wahlweise für die rechte oder linke Hand optimiert einsetzbar ist. Die Herstellungskosten sollen dabei weiterhin möglichst gering gehalten werden, wodurch das Produkt großflächig und günstig einsetzbar ist.

Diese Aufgabe wird erfindungsgemäß dadurch gelöst, dass im Gehäuse eine zweite Tastaturplatine mit zugehörigen zweiten Tasten untergebracht ist, wobei die zweiten Tasten auf der von der ersten Gehäuseseite abgewandten zweiten Gehäuseseite liegen, und wobei das Layout der zweiten Tasten spiegelverkehrt zum Layout der ersten Tasten ist, und dass im Gehäuse ferner ein Detektionselement zur Bestimmung der momentanen Ausrichtung des Eingabegeräts vorgesehen ist, wobei das Detektionselement je nach Ausrichtung jeweils nur die nach oben gerichtete Tastaturplatine aktiviert und die andere Tastaturplatine deaktiviert. Bei den Herstellungskosten sind mittlerweile die Elektronikbestandteile nicht mehr der ausschlaggebende Faktor. Ein Großteil der hier anfallenden Kosten fällt auf die Spritzgusswerkzeuge für die Herstellung des Gehäuses sowie der Tasten. Das Vorsehen einer zweiten Tastaturplatine erhöht folglich die Herstellungskosten nicht in übermäßigem Ausmaß. Die Tasten sind auf beiden Seiten weitgehend gleich ausgebildet nur anders angeordnet, weshalb auch hier die Kosten gering gehalten werden. Auch für das Gehäuse fallen keine höheren Kosten an, als bei der oben genannten Tastatur gemäß dem Stand der Technik, da nur eine Art von Gehäuse gefertigt werden muss. Der Nutzer kann das erfindungsgemäße Eingabegerät einfach in der gewünschten Ausrichtung für die linke oder rechte Hand vor sich platzieren und das Detektionselement erkennt, welche der beiden Tastaturplatinen nach oben gerichtet ist und aktiviert diese während die andere deaktiviert wird. Selbst wenn mehrere Personen mit unterschiedlichen Präferenzen der Nutzung an einem Gerät arbeiten, kann jeder Nutzer einfach im laufenden Betrieb das Eingabegerät umdrehen und damit jeweils die andere Tastaturplatine aktivieren.

Gemäß einem weiteren vorteilhaften Merkmal ist es vorgesehen, dass im Scheitelbereich des kreissektorförmigen Gehäuses ein Vorsprung vorgesehen ist, mit welchem eine auf den Vorsprung aufsteckbare Handauflage verbunden ist, wobei der Vorsprung symmetrisch ausgebildet ist, sodass die Handauflage wahlweise in einer der beiden möglichen Ausrichtungen des Eingabegeräts aufsteckbar ist. Durch eine erhöhte Handauflage ist es möglich, dass bei längerem Arbeiten an der Tastatur der Nutzer die Hand bequem im Scheitelbereich des Eingabegeräts auflegen kann und damit ohne Überanstrengung des Handgelenks alle Tasten bequem erreichen kann. Beim Wechsel der Ausrichtung wird die Handauflage einfach abgezogen und nach dem Umdrehen der Tastatur wieder auf den Vorsprung aufgesteckt.

Dabei ist es ein weiteres vorteilhaftes Merkmal, dass am Gehäuse und/oder an der Handauflage Rastvorsprünge bzw. gegengleiche Ausnehmungen zur Sicherung der Handauflage in der jeweiligen aufgesteckten Position vorgesehen sind. Damit die Handauflage für den Nutzer erkennbar am Gehäuse des Eingabegeräts gehalten ist, ist es vorteilhaft, wenn diese in ihrer aufgesteckten Position am Gehäuse einrastet.

Alternativ oder zusätzlich dazu ist es ein weiteres vorteilhaftes Merkmal, dass am Gehäuse und/oder an der Handauflage magnetische Verbindungselemente zur Sicherung der Handauflage in der jeweiligen aufgesteckten Position vorgesehen sind. Anstelle von oder zusätzlich zu mechanischen Verrastungen können auch magnetische Verbindungselemente zwischen Handauflage und Gehäuse vorgesehen sein. Magnetische Verbindungselemente haben den Vorteil, dass diese auch vollkommen unsichtbar im Inneren des Gehäuses bzw. der Handauflage untergebracht werden können und somit ein glattes äußeres Gehäuse ermöglichen, welches leichter zu reinigen ist.

Gemäß einer möglichen Ausführungsform ist es vorgesehen, dass das Detektionselement ein Lagesensor, beispielsweise ein Beschleunigungssensor oder Neigungssensor ist. Diese Sensoren werden mittlerweile recht kostengünstig und großflächig, beispielsweise bei Tablets oder Mobiltelefonen, eingesetzt.

Gemäß einer alternativen Ausführungsform ist es vorgesehen, dass das Detektionselement durch am Gehäuse angeordnete elektrische Kontaktpunkte gebildet ist, wobei die Kontaktpunkte symmetrisch auf beiden Gehäuseseiten angeordnet sind, und wobei jeweils bei aufgesteckter Handauflage nur die Kontaktpunkte von einer Gehäuseseite mit entsprechenden Gegenkontakten an der Handauflage in Verbindung stehen, wodurch die Ausrichtung des Eingabegeräts durch die Aufsteckrichtung der Handauflage festgelegt ist. Diese Variante ist besonders kostengünstig zu realisieren. Da die Handauflage bei der Änderung der Ausrichtung des Eingabegeräts ohnehin abgezogen und wieder aufgesteckt werden muss, kann dabei zusätzlich durch die Herstellung eines elektrischen Kontakts die jeweils passende Tastaturplatine aktiviert werden.

Ein zusätzliches vorteilhaftes Merkmal ist es, dass am Vorsprung des Gehäuses für die Handauflage zu beiden Seiten hin jeweils eine Taste angeordnet ist, wobei je nach Ausrichtung der aufgesteckten Handauflage jeweils nur eine der beiden Tasten durch die Handauflage betätigbar ist. Diese zusätzliche Taste kann frei programmiert werden oder beispielsweise auch für das entsperren der Tastatur dienen, sodass nur bei aufgelegter Hand auf der Handauflage die betreffende Tastaturplatine aktiviert wird.

Schließlich ist es ein weiteres vorteilhaftes Merkmal, dass am Gehäuse zu beiden Seiten hin jeweils Stützvorsprünge angeordnet sind, welche höher sind als die auf der jeweiligen Gehäuseseite befindlichen Tasten im unbelasteten Zustand. Die Stützvorsprünge können beispielsweise als Stege oberhalb und unterhalb der jeweiligen Tasten ausgeführt sein. Dadurch wird sichergestellt, dass die Tasten an der jeweils nach unten ausgerichteten Gehäuseseite, welche gerade deaktiviert sind, bei der Benutzung nicht gedrückt werden. Da die zugehörige Tastaturplatine ohnehin in diesem Zustand gerade deaktiviert ist, hätte ein Drücken zwar keine Auswirkung auf die Funktion des Eingabegeräts, aber es könnte dem Nutzer ein unsicheres und wackeliges Gefühl vermitteln. Die Stützvorsprünge erlauben dahingegen eine sichere feste Aufstellung des Eingabegeräts auf einem ebenen Untergrund.

### Kurze Beschreibung der Zeichnungen

Die Erfindung wird nun in größerem Detail anhand eines Ausführungsbeispiels sowie mit Hilfe der beiliegenden Figuren beschrieben. Dabei zeigen
Fig 1 eine schematische perspektivische Ansicht einer ersten Gehäuseseite eines erfindungsgemäßen Eingabegeräts,
Fig. 2 eine schematische perspektivische Ansicht der zweiten Gehäuseseite des erfindungsgemäßen Eingabegeräts aus Fig. 1,
Fig. 3 eine Seitenansicht des erfindungsgemäßen Eingabegeräts aus Fig. 1 und
Fig. 4 eine Explosionsansicht des erfindungsgemäßen Eingabegeräts aus Fig. 1 mit abgenommener Handauflage.

### Weg(e) zur Ausführung der Erfindung

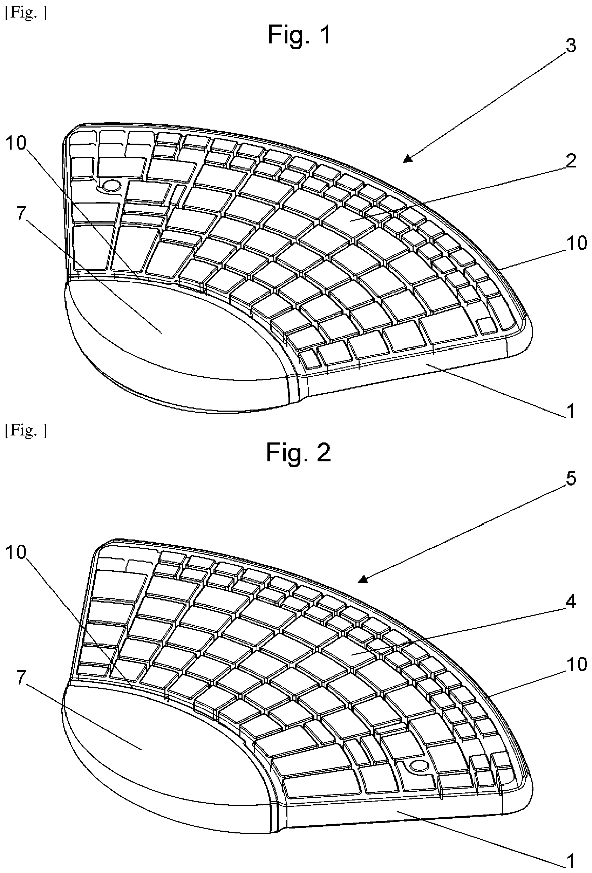

Das in Fig. 1 dargestellte erfindungsgemäße Eingabegerät weist ein Gehäuse 1 auf, in welchem zwei Tastaturplatinen mit einander entgegengesetzter Ausrichtung angeordnet sind. Eine davon weist nach oben und steht mit ersten Tasten 2 in Verbindung, welche durch entsprechende Durchbrüche an einer ersten Gehäuseseite 3 ragen. Im Scheitelbereich des viertelkreissektorförmigen Gehäuses 1 ist eine Handauflage 7 angeordnet. Die Handauflage 7 kann beispielsweise ein Gelkissen sein, welches am Gehäuse 1 aufgesteckt ist.

Oberhalb und unterhalb der Tasten 2 befinden sich Stützvorsprünge 10 in Form von ebenfalls konzentrisch zueinander angeordneten kreisbogenabschnittsförmigen Rippen. In Fig. 2 ist das Eingabegerät aus Fig. 1 dargestellt, wenn es sich in der anderen Ausrichtung befindet. Dazu wird die Handauflage 7 abgezogen, das Eingabegerät umgedreht und anschließend die Handauflage 7 wieder aufgesteckt. In der zweiten Ausrichtung befindet sich nun die zweite Gehäuseseite 5 oben. Die zweiten Tasten 4 der zweiten Tastaturplatine sind dabei in einem Layout angeordnet, welches spiegelverkehrt zum Layout der ersten Tasten 2 ist. Dadurch kann das Eingabegerät sehr einfach an einen Rechts- bzw. Linkshänder angepasst werden, wobei jeder Nutzer die gleichen Ergonomievorteile genießt.

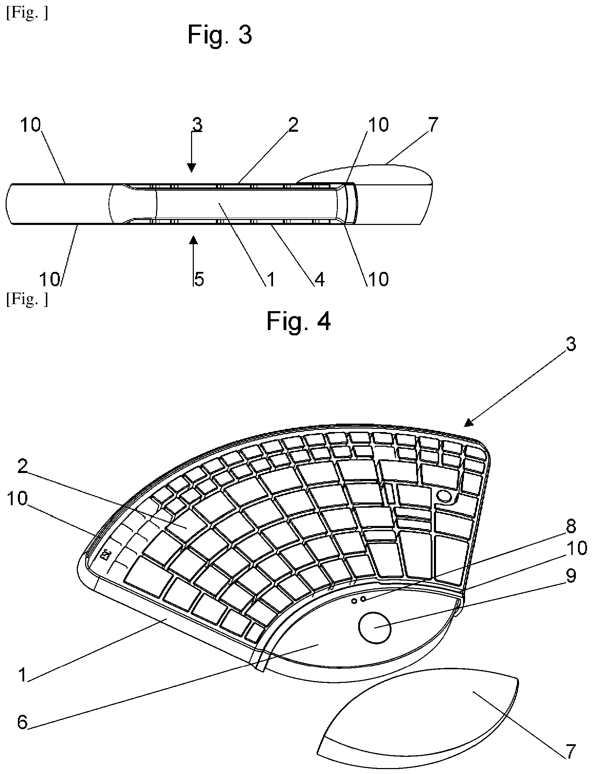

Fig. 3 zeigt das Eingabegerät von der Seite, wobei beide Gehäuseseiten 3,5 und die Tasten 2,4 von beiden Tastaturplatinen zu erkennen sind. Ebenfalls gut zu erkennen sind die Stützvorsprünge 10, welche die Tasten 2,4 geringfügig in der Höhe überragen und so als Aufstellpunkte für das Eingabegerät am Untergrund dienen.

In Fig. 4 ist das erfindungsgemäße Eingabegerät mit abgezogener Handauflage 7 dargestellt, wodurch er Vorsprung 6 im Scheitelbereich des Gehäuses 1 sichtbar ist, auf welchen die Handauflage 7 aufsteckbar ist. Schematisch angedeutet ist am Vorsprung 6 eine Taste 9 dargestellt, welche bei aufgesteckter Handauflage 7 durch Druck auf die Handauflage 7 betätigbar ist. Ferner sind Kontaktpunkte 8 dargestellt, welche mit einem entsprechenden Gegenkontakt an der Handauflage 7 beim Aufstecken in entsprechender Ausrichtung eine elektrische Verbindung herstellen und somit bei dieser Ausführungsform als Detektionselement für die Ausrichtung des Eingabegeräts dienen.

## Patentansprüche

1. Einhandtastatur umfassend ein flaches Gehäuse (1) in der Form eines Viertelkreissektors, in welchem eine erste Tastaturplatine mit zugehörigen ersten Tasten (2) untergebracht ist, wobei die ersten Tasten (2) auf einer ersten Gehäuseseite (3) liegen und fächerartig entlang von konzentrischen Kreisbogenabschnitten angeordnet sind, **dadurch gekennzeichnet, dass** im Gehäuse (1) eine zweite Tastaturplatine mit zugehörigen zweiten Tasten (4) untergebracht ist, und wobei ferner die zweiten Tasten auf der von der ersten Gehäuseseite (3) abgewandten zweiten Gehäuseseite (5) liegen, wobei das Layout der zweiten Tasten (4) spiegelverkehrt zum Layout der ersten Tasten (2) ist, **und dass** im Gehäuse (1) ferner ein Detektionselement zur Bestimmung der momentanen Ausrichtung des Eingabegeräts vorgesehen ist, wobei das Detektionselement je nach Ausrichtung jeweils nur die jeweils nach oben gerichtete Tastaturplatine aktiviert und die jeweils andere Tastaturplatine deaktiviert.

2. Einhandtastatur nach Anspruch 1, **dadurch gekennzeichnet, dass** im Scheitelbereich des kreissektorförmigen Gehäuses (1) ein Vorsprung (6) vorgesehen ist, mit welchem eine auf den Vorsprung aufsteckbare Handauflage (7) verbunden ist, wobei der Vorsprung (6) symmetrisch ausgebildet ist, sodass die Handauflage (7) wahlweise in einer der beiden möglichen Ausrichtungen des Eingabegeräts aufsteckbar ist.

3. Einhandtastatur nach Anspruch 2, **dadurch gekennzeichnet, dass** am Gehäuse (1) und/oder an der Handauflage (7) Rastvorsprünge bzw. gegengleiche Ausnehmungen zur Sicherung der Handauflage (7) in der jeweiligen aufgesteckten Position vorgesehen sind.

4. Einhandtastatur nach Anspruch 2 oder 3, **dadurch gekennzeichnet, dass** am Gehäuse (1) und/oder an der Handauflage (7) magnetische Verbindungselemente zur Sicherung der Handauflage (7) in der jeweiligen aufgesteckten Position vorgesehen sind.

5. Einhandtastatur nach einem der Ansprüche 1 bis 4, **dadurch gekennzeichnet, dass** das Detektionselement ein Lagesensor, beispielsweise ein Beschleunigungssensor oder Neigungssensor ist.

6. Einhandtastatur nach einem der Ansprüche 2 bis 4, **dadurch gekennzeichnet, dass** das Detektionselement durch am Gehäuse (1) angeordnete elektrische Kontaktpunkte (8) gebildet ist, wobei die Kontaktpunkte (8) symmetrisch auf beiden Gehäuseseiten (3,5) angeordnet sind, und wobei jeweils bei aufgesteckter Handauflage (7) nur die Kontaktpunkte (8) von einer Gehäuseseite (3,5) mit entsprechenden Gegenkontakten an der Handauflage (7) in Verbindung stehen, wodurch die Ausrichtung des Eingabegeräts durch die Aufsteckrichtung der Handauflage (7) festgelegt ist.

7. Einhandtastatur nach einem Ansprüche 2 bis 6, **dadurch gekennzeichnet, dass** am Vorsprung (6) des Gehäuses (1) für die Handauflage (7) zu beiden Seiten hin jeweils eine Taste (9) angeordnet ist, wobei je nach Ausrichtung der aufgesteckten Handauflage (7) jeweils nur eine der beiden Tasten (9) durch die Handauflage (7) betätigbar ist.

8. Einhandtastatur nach einem der Ansprüche 1 bis 7, **dadurch gekennzeichnet, dass** am Gehäuse (1) zu beiden Seiten hin jeweils Stützvorsprünge (10) angeordnet sind, welche höher sind als die auf der jeweiligen Gehäuseseite (3,5) befindlichen Tasten (2,4) im unbelasteten Zustand.

## Claims

1. A one-hand keyboard comprising a flat housing (1) shaped as a quadrant sector, wherein a first keyboard PCB with corresponding first keys (2) is accommodated, the first keys (2) being arranged on a first side (3) of the housing in a fan-shaped way in concentric circularly arcuate rows, **characterized in that** a second keyboard PCB with corresponding second keys (4) is accommodated in the housing (1), the second keys being on the second side (5) of the housing facing away from the first side (3) of the housing, the layout of the second keys (4) being a mirror image of the layout of the first keys (2), **and in that** a detection element is also provided in the housing (1) for determining a current orientation of the input device, the detection element, depending on the orientation, only activating the keyboard PCB pointing upward and deactivating the other keyboard PCB.

2. The one-hand keyboard according to claim 1, **characterized in that** a projection (6) is provided in an apex area of the sector-shaped housing (1) where a hand rest (7) can be attached to the projection, the projection (6) being symmetrical so that the hand rest (7) can optionally be attached in one of the two possible orientations of the input device.

3. The one-hand keyboard according to claim 2, **characterized in that** latching projections or complementary recesses are provided on the housing (1) and/or on the hand rest (7) to secure the hand rest (7) in the respective attached position.

4. The one-hand keyboard according to claim 2 or 3, **characterized in that** magnetic connecting elements are provided on the housing (1) and/or on the hand rest (7) to secure the hand rest (7) in the attached positions.

5. The one-hand keyboard according to one of claims 1 to 4, **characterized in that** the detection element is a position sensor, for example an acceleration sensor or an inclination sensor.

6. The one-hand keyboard according to one of claims 2 to 4, **characterized in that** the detection element is formed by electrical contact points (8) arranged on the housing (1), the contact points (8) being arranged symmetrically on both sides (3, 5) of the housing, and wherein each time the hand rest (7) is attached, only the contact points (8) on one side (3, 5) of the housing are connected to corresponding mating contacts on the hand rest (7), whereby the orientation of the input device is determined by the orientation in which the hand rest (7) is attached.

7. The one-hand keyboard according to one of claims 2 to 6, **characterized in that** respective buttons (9) are on both sides of the projection (6) of the housing (1) for the hand rest (7), whereby depending on the orientation of the attached hand rest (7) only one of the two buttons (9) can be actuated by the hand rest (7) .

8. The one-hand keyboard according to one of claims 1 to 7, **characterized in that** support projections (10) are arranged on both sides of the housing (1) that are taller than the keys (2, 4) on the respective side (3, 5) in the unpressed state.

## Revendications

1. Clavier à une main comprenant un boîtier (1) plat qui a la forme d'un quadrant de cercle et qui accueille une première platine de clavier comportant des premières touches (2) associées, les premières touches (2) étant situées sur une première face de boîtier (3) tout en étant disposées le long de segments d'arc de cercle concentriques, **caractérisé en ce que** le boîtier (1) accueille une deuxième platine de clavier comportant des deuxièmes touches (4) associées, lesdites deuxièmes touches étant situées par ailleurs sur la deuxième face de boîtier (5) laquelle se trouve à l'opposé de la première face de boîtier (3), la disposition des deuxièmes touches (4) correspondant à une reproduction inversée par miroir de la disposition des premières touches (2), **et que** le boîtier (1) est en outre pourvu d'un élément de détection destiné à déterminer l'orientation actuelle de l'appareil de saisie, l'élément de détection permettant, selon l'orientation, d'activer seulement la platine de clavier actuellement tournée vers le haut et de désactiver l'autre platine de clavier.

2. Clavier à une main selon la revendication 1, **caractérisé en ce que** le boîtier (1) en forme de secteur de cercle est pourvu, dans les zones de convergence des deux rayons, d'une saillie (6) qui est reliée à un repose-main (7) pouvant être emboîté sur ladite saillie, la saillie (6) étant réalisée sous une forme symétrique, faisant en sorte que le repose-main (7) puisse être sélectivement emboîté selon l'une des deux orientations possibles de l'appareil de saisie.

3. Clavier à une main selon la revendication 2, **caractérisé en ce que** le boîtier (1) et/ou le repose-main (7) est pourvu de crans d'encliquetage ou d'évidements complémentaires destinés à sécuriser le repose-main (7) dans sa position d'emboîtement actuelle.

4. Clavier à une main selon les revendications 2 ou 3, **caractérisé en ce que** le boîtier (1) et/ou le repose-main (7) est pourvu d'éléments de liaison magnétiques destinés à sécuriser le repose-main (7) dans sa position d'emboîtement actuelle.

5. Clavier à une main selon l'une des revendications 1 à 4, **caractérisé en ce que** ledit élément de détection est un capteur de situation, par exemple un capteur d'accélération ou un capteur d'inclinaison.

6. Clavier à une main selon l'une des revendications 2 à 4, **caractérisé en ce que** l'élément de détection est formé par des points de contact (8) électriques disposés sur le boîtier (1), les points de contact (8) étant disposés de manière symétrique sur les deux faces de boîtier (3, 5), seuls les points de contact (8) de l'une des faces de boîtier (3, 5), selon la façon dont le repose-main (7) est actuellement emboîté, étant en liaison avec des contacts opposés correspondants situés sur le repose-main (7), faisant en sorte que l'orientation de l'appareil de saisie soit déterminée par le sens d'emboîtement du repose-main (7).

7. Clavier à une main selon l'une des revendications 2 à 6, **caractérisé en ce que** chacune des faces de la saillie (6) du boîtier (1) destinée au repose-main (7) est pourvue d'une touche (9), seule une des deux touches (9) pouvant être actionnée par le repose-main (7), en fonction de l'orientation du repose-main (7) emboîté.

8. Clavier à une main selon l'une des revendications 1 à 7, **caractérisé en ce que** les deux faces du boîtier (1) sont pourvues de saillies d'appui (10) dont l'hauteur est supérieure à celle des touches (2, 4) situées sur la face de boîtier (3, 5) concernée, en l'absence de contraintes.
